Europäisches Patentamt

European Patent Office

Office européen des brevets

(19)

(11) Veröffentlichungsnummer: **0 296 200**
**B1**

(12) **EUROPÄISCHE PATENTSCHRIFT**

(45) Veröffentlichungstag der Patentschrift: **11.04.90**

(51) Int. Cl.⁵: **F 15 B 1/053**

(21) Anmeldenummer: **88900542.7**

(22) Anmeldetag: **07.01.88**

(86) Internationale Anmeldenummer:
**PCT/DE88/00008**

(87) Internationale Veröffentlichungsnummer:
**WO 88/05134 14.07.88 Gazette 88/15**

(54) **KOLBENSPEICHER.**

(30) Priorität: **10.01.87 DE 3700576**

(43) Veröffentlichungstag der Anmeldung:
**28.12.88 Patentblatt 88/52**

(45) Bekanntmachung des Hinweises auf die
Patenterteilung:
**11.04.90 Patentblatt 90/15**

(84) Benannte Vertragsstaaten:
**AT DE FR GB SE**

(56) Entgegenhaltungen:
**FR-A-1 368 353**
**FR-A-2 347 555**

(73) Patentinhaber: **ROBERT BOSCH GMBH**
**Postfach 10 60 50**
**D-7000 Stuttgart 10 (DE)**

(72) Erfinder: **BERDING, Josef**
**Elisabeth-Kallenberg-Weg 2**
**D-7140 Ludwigsburg (DE)**
Erfinder: **BERTLING, Hannes**
**Alter Postweg 37**
**D-7143 Vaihingen/Enz (DE)**
Erfinder: **LEES, Thomas**
**Herrschaftsweg 4**
**D-7140 Ludwigsburg (DE)**
Erfinder: **PABST, Carsten**
**Freibergstr. 48**
**D-7000 Stuttgart 50 (DE)**

Courier Press, Leamington Spa, England.

## Beschreibung

### Stand der Technik

Die Erfindung geht aus von einem Kolbenspeicher nach der Gattung des Hauptanspruchs. Bei einem derartigen. aus der FR-A-13 68 353 bekanntgewordenen Kolbenspeicher wird der Gasraum über ein Füllventil mit entsprechender Verschraubung aufgeladen. Dies erfordert extra Teile, durch welche ein zusätzlicher Aufwand notwendig ist.

### Vorteile der Erfindung

Der erfindungsgemäße Kolbenspeicher mit den kennzeichnenden Merkmalen des Hauptanspruchs hat demgegenüber den Vorteil, daß das Aufladen des Gasraums mit Druckgas außerordentlich einfach ist und keine zusätzlichen Teile benötigt.

Besonders vorteilhafte Ausgestaltungen der Erfindung ergeben sich aus den Unteransprüchen.

### Zeichnung

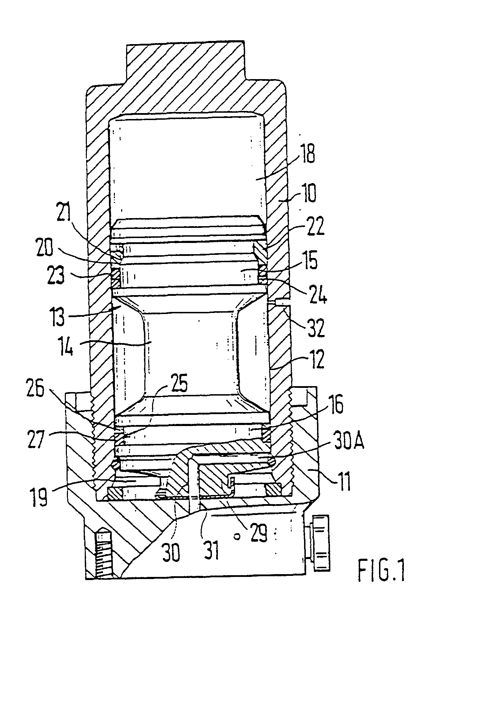

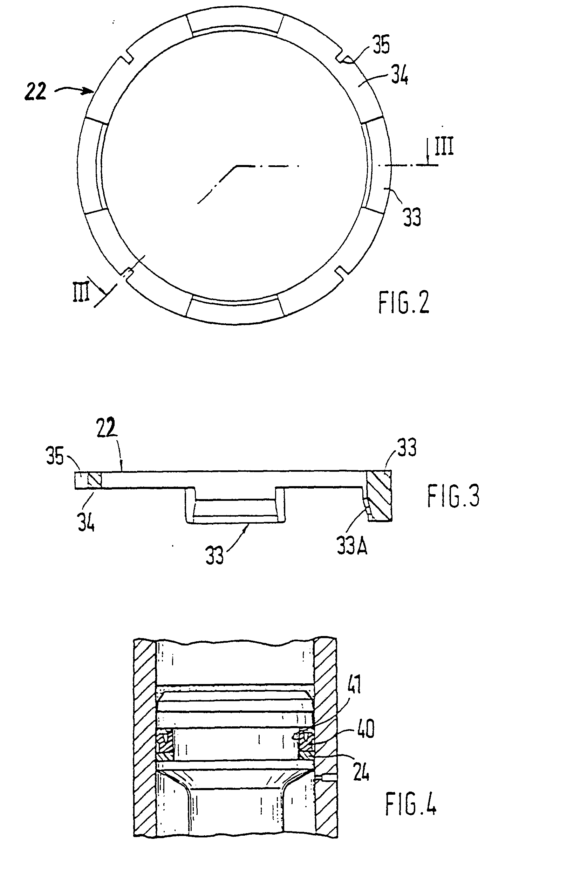

Ein Ausführungsbeispiel der Erfindung ist in der nachfolgenden Beschreibung und der Zeichnung wiedergegeben. Letztere zeigt in Figur 1 einen Längsschnitt durch einen Kolbenspeicher, in Figur 2 eine Draufsicht auf einen Dichtring, in Figur 3 einen Schnitt längs III-III nach Figur 2, Figur 4 einen Teilschnitt eines weiteren Ausführungsbeispiels.

### Beschreibung des Ausführungsbeispiels

In Figur 1 ist mit 10 das etwa zylindrisch und hohl ausgebildete Gehäuse eines Kolbenspeichers bezeichnet, dessen Öffnung durch einen Deckel 11 verschlossen ist. In der zylindrischen Bohrung 12 des Gehäuses 10 ist ein Kolben 13 dicht gleitend geführt. Er hat eine mittige Einschnürung 14, so daß sich beidseitig derselben Bunde 15 und 16 ergeben, die geringes Spiel haben. Der Kolben 13 trennt einen Gasraum 18 von einem Flüssigkeitsraum 19. Am Bund 15 des Kolbens 13 ist eine längliche Ringnut 20 ausgebildet, die zum Gasraum hin eine sich teilweise konisch verjüngende Partie 21 aufweist. In dieser Ringnut sind drei Ringelemente angeordnet, nämlich ein dem Gasraum zugewandter Profilring 22, ein nachfolgender O-Ring 23 und ein hinter diesem liegender Stützring 24 mit etwa rechteckigem Querschnitt.

Am Bund 16 befindet sich ebenfalls in einer Ringnut 25 eine Dichtungsanordnung, die aus einem dem Flüssigkeitsraum 19 zugewandten O-Ring 27 und einem davorliegenden Dichtungsring 26 mit etwa rechteckigem Querschnitt besteht. An dieser Seite ist am freien Ende des Bundes 16 ein Stutzen 29 angeformt. Diesen und den unteren Teil des Bundes 16 durchdringt ein Kanal 30, der einerseits mit einer durchgehenden Bohrung 31 im Deckel 11 Verbindung hat, andererseits am Außenumfang des Bundes in einem Kanalabschnitt 30A mündet.

Etwa in der Mitte des Gehäuses 10 ist eine die Wand desselben durchdringende Bohrung 32 ausgebildet. Diese mündet mindestens dann, wenn sich der Kolben 13 in einer Position befindet, in welcher der Flüssigkeitsraum 19 entleert ist, in dem Bereich, in dem sich die Einschnürung 14 befindet.

Der Profilring 22 ist in den Figuren 2 und 3 näher dargestellt. Er hat einen außenliegenden, im Querschnitt etwa rechteckigen Wulst 33 mit einer innenliegenden Abschrägung 33A. Der Wulst 33 ist mehrfach durch flache Ausnehmungen 34 unterbrochen, an deren jeder sich ein kurzer radialer Einschnitt 35 befindet. Der Profilring 22 ist derart in der Ringnut 20 angeordnet, daß sich deren konische Partie 21 und die Abschrägung 33A gegenüberliegen. Der Stützring 24 verhindert die Spaltextrusion des O-Ringes 23.

Bevor der Kolbenspeicher in Betrieb genommen wird, muß er mit Gas aufgeladen werden. Dies geschieht über die Bohrung 32. Der Druck pflanzt sich nun fort und dringt über das Spiel zwischen dem Bund 15 und der Bohrung 12 sowie über den Stützring 24 zum O-Ring 23, der nun teilweise in die Ausnehmungen 34 des Profilrings 22 gedrückt wird. Dadurch gelangt der O-Ring 23 teilweise auch an die konische Partie 21 und schnürt sich dort durch seine Eigenspannung ein, so daß an seinem Außenumfang Verbindung hergestellt wird über den äußeren Bund 15 zum Gasraum 18, d. h. das Druckgas dringt entlang des Bundes und der Dichtungsanordnung in den Gasraum 18 ein. Herrscht in diesem der gleiche Druck wie in der Druckgasquelle, so herrscht Druckgleichgewicht im Bereich 14 und im Gasraum 18 Darauf gelangt der O-Ring 23 aufgrund seiner Elastizität und der besonderen Nutform (schräge Partie 21) in seine zuvor eingenommene Ruhelage, d. h. an die zylindrische Partie der Ringnut 20, worauf er den Gasraum abdichtet. Der Kolbenspeicher ist nun betriebsbereit. Die Bohrung 31 im Deckel 11 ist an eine Hydraulikanlage angeschlossen, so daß flüssiges Druckmittel über die Bohrung 31 und den Kanal 30A in den Flüssigkeitsraum 19 eindringen kann, wenn der Druck des flüssigen Druckmediums größer ist als der Gasdruck.

Die Dichtungsanordnungen an den Bunden 15 und 16 sorgen für eine gute Abdichtung zwischen Gasraum und Flüssigkeitsraum. Der Gasraum 18 kann — falls erforderlich — nach einer bestimmten Betriebsdauer wieder leicht über die Bohrung 32 aufgeladen werden. Diese ist zweckmäßigerweise so angeordnet, daß in beiden Endstellungen des Kolbens 13 Verbindung zur Einschnürung 14 besteht.

Die Dichtungsanordnung aus den Dichtungsringen 21 bis 23 kann selbstverständlich abgewandelt werden und beispielsweise aus einem Lippendichtring 40 bestehen, der anstelle des Profilrings 22 tritt. Eine solche Ausführung ist in Figur 4 wiedergegeben. Die Ringnut 41 hat nun Rechteckprofil,.

## Patentansprüche

1. Kolbenspeicher, dessen Kolben (13) einen Gasraum (18) von einem Flüssigkeitsraum (19) trennt und der Kolben einen etwa mittleren, im Durchmesser eingeschnürten Bereich (14) aufweist, wobei der Raum zwischen dem eingeschnürten Bereich (14) und der Wand des Speichergehäuses (10) über eine diese durchdringenden Kanal (32) Verbindung nach außen hat und sich an dem dem Gasraum (18) zugewandten Kolbenbund (15) eine in einer Ringnut (20; 47) liegende Dichtungsanordnung (22 bis 24; 40, 24) befindet, dadurch gekennzeichnet, daß der Dichtungsanordnung (22 bis 24; 40, 24) eine Einwegeventilfunktion derart zugeordnet ist, daß zur Aufladung des Kolbenspeichers mit Gas eine Verbindung zwischen einer Druckgasquelle und dem Gasraum (18) über den Kanal (32), den eingeschnürten Bereich (14) und die Dichtungsanordnung herstellbar ist.

2. Kolbenspeicher nach Anspruch 1, dadurch gekennzeichnet, daß die Ringnut (20) einen dem Gasraum (18) zugewandten konischen Bereich (21) aufweist.

3. Kolbenspeicher nach Anspruch 1 und/oder 2, dadurch gekennzeichnet, daß die Dichtungsanordnung mindestens aus einem O-Ring (23) und einem Profilring (22) besteht, der näher zum Gasraum (18) liegt als der O-Ring und an seinem Außenfumfang mindestens eine Vertiefung (34) aufweist, in welche der O-Ring (23) beim Aufladen des Kolbenspeichers mit Druckgas hineingedrückt wird.

4. Kolbenspeicher nach Anspruch 1, dadurch gekennzeichnet, daß die Ringnut (41) Rechteckprofil aufweist, in der ein Lippendichtring (40) und ein Stützring (24) angeordnet sind.

## Revendications

1. Accumulateur à piston dont le piston (13) sépare une chambre à gaz (18) d'une chambre à liquide (19), le piston présentant une zone (14) sensiblement médiane, à diamètre diminué et la chambre est reliée entre la zone en retrait (14) et la paroi du boîtier de l'accumulateur (10) par un canal (32) traversant cette paroi, pour déboucher à l'extérieur et dans le collet de piston (15) situé du côté de la chambre à gaz (18) il est prévu un moyen d'étanchéité (22...24; 40, 24) logé dans une rainure annulaire (20, 41), caractérisé en ce que le moyen d'étanchéité (22-24; 40, 24) présente une fonction de soupape unidirectionnelle, et pour charger l'accumulateur à piston avec du gaz on peut réaliser une liaison entre une source de gaz comprimé et la chambre à gaz (18) par le canal (32), la zone en retrait (14) et le moyen d'étanchéité.

2. Accumulateur à piston selon la revendication 1, caractérisé en ce que la rainure annulaire (20) présente une zone conique (21) du côté de la chambre à gaz (18).

3. Accumulateur à piston selon la revendication 1 et/ou 2, caractérisé en ce que le moyen d'étanchéité se compose au moins d'un joint torique (23) et d'un anneau profilé (22) qui est situé plus près de la chambre à gaz (18) que le joint torique et dont la périphérie extérieure comporte au moins une cavité (34) dans laquelle vient s'enfoncer le joint torique (23) lors du chargement de l'accumulateur à piston avec le gaz comprimé.

4. Accumulateur à piston selon la revendication 1, caractérisé en ce que la rainure annulaire (41) a un profil rectangulaire et elle reçoit un anneau d'étanchéité à lèvres (40) et son anneau d'appui (24).

## Claims

1. Piston receiver whose piston (13) separates a gas space (18) from a liquid space (19) and the piston has a roughly central area (14) narrowed in diameter, the space between the narrowed area (14) and the wall of the receiver housing (10), via a channel (32) which passes through the latter, being connected to the outside, and a sealing arrangement (22 to 24; 40, 24) which lies in an annular groove (20; 41) being located on the piston collar (15) facing the gas space (18), characterized in that a one-way valve function is allocated to the sealing arrangement (22 to 24; 40, 24) in such a way that, to charge the piston receiver with gas, a connection can be made between a pressure-gas source and the gas space (18) via the channel (32), the narrowed area (14) and the sealing arrangement.

2. Piston receiver according to Claim 1, characterized in that the annular groove (20) has a conical area (21) facing the gas space (18).

3. Piston receiver according to Claim 1 and/or 2, characterized in that the sealing arrangement consists at least of an O-ring (23) and a profiled ring (22) which lies closer to the gas space (18) than the O-ring and, at its outer periphery, has at least one recess (34) into which the O-ring (23) is pressed when the piston receiver is charged with pressure gas.

4. Piston receiver according to Claim 1, characterized in that the annular groove (41) has a rectangular profile in which a lipped sealing ring (40) and a supporting ring (24) are arranged.

FIG.1

FIG.2

FIG.3

FIG.4